# EUROPEAN PATENT APPLICATION

(11) **EP 4 733 601 A1**
(43) Date of publication of application: **29.04.2026**
(21) Application number: 24831747.1
(22) Date of filing: 17.06.2024
(51) Int. Cl.: F04D 29/64, B29C 45/14, F04D 29/38, F04D 29/54

(54) **METHOD FOR MANUFACTURING CONSTITUENT MEMBER, CONSTITUENT MEMBER, AND FAN PROVIDED WITH CONSTITUENT MEMBER**

(30) Priority: 30.06.2023 JP 2023108003; 15.04.2024 JP 2024065687
(71) Applicant: Daikin Industries, Ltd., Osaka-shi, Osaka 530-0001 (JP)
(72) Inventor: TSUJI, Yoshihide, Osaka-shi, Osaka 530-0001 (JP); TOMIOKA, Hirotaka, Osaka-shi, Osaka 530-0001 (JP)
(74) Representative: Hoffmann Eitle
(86) International application number: PCT/JP2024/021869
(87) International publication number: WO 2025/004884

(57) **Abstract**

A method for manufacturing a constituent member configured to constitute an air passage (S2) formed within a predetermined device (20) and to be in contact with air flowing through the air passage (S2) includes: a first step of forming an assembly (51) of a plate-shaped porous member (53) and a frame member (52) by fixing the porous member (53) to an inner frame of the frame member (52); and a second step of integrating the assembly (51) and the constituent member (41, 62) with each other by providing the assembly (51) in a first region (R) of the constituent member (41, 62).

## Description

### TECHNICAL FIELD

The present disclosure relates to a method for manufacturing a constituent member, the constituent member, and a fan provided with the constituent member.

### BACKGROUND ART

As a countermeasure against the noise of fans, it has been known to provide a porous member to a blade of a propeller fan. Providing a porous member to a blade can reduce separation of air from the suction surface of the blade, reducing noise generation. Patent Document 1 discloses a method for manufacturing a propeller fan having such blades.

### CITATION LIST

### PATENT DOCUMENT

PATENT DOCUMENT 1: Japanese Unexamined Patent Publication No. H04-12199

### SUMMARY OF THE INVENTION

### TECHNICAL PROBLEM

In Patent Document 1, a porous member is formed by filling a mold, which conforms to the shape of a blade surface, with a resin sintering material, and then sintering the material. Subsequently, the porous member is integrally molded with the blade by injection molding. Thus, it has been necessary to shape the porous member so as to conform to the shape of the blade surface by sintering, thereby increasing the time and effort required to manufacture porous members.

An object of the present disclosure is to simplify the manufacture of a constituent member provided with a porous member.

### SOLUTION TO THE PROBLEM

A first aspect is directed to a method for manufacturing a constituent member configured to constituting an air passage (S2) formed within a predetermined device (20) and to be in contact with air flowing through the air passage (S2). The method includes: a first step of forming an assembly (51) of a plate-shaped porous member (53) and a frame member (52) by fixing the porous member (53) to an inner frame of the frame member (52); and a second step of integrating the assembly (51) and the constituent member (41, 62) with each other by providing the assembly (51) in a first region (R) of the constituent member (41, 62).

In the first aspect, merely using the plate-shaped porous member (53) is sufficient, and it is not necessary to specially shape the porous member (53) so as to conform to the shape of the first region (R) of the constituent member. Therefore, the number of manufacturing steps of the constituent members can be reduced, and the manufacturing cost can be reduced.

A second aspect is an embodiment of the first aspect. In the second aspect, the method further includes a third step of shaping the frame member (52) so as to conform to a shape of the first region (R).

In the second aspect, since processing the frame member to conform to the shape of the first region (R) is easier than processing the porous member (53) to conform to the first region (R), the manufacture of the constituent member can be facilitated, and variations in the shapes of constituent members can be reduced.

A third aspect is an embodiment of the first or second aspect. In the third aspect, the first region (R) is an opening formed in the constituent member (41, 62), and the second step includes fixing the assembly (51) into the opening.

In the third aspect, the constituent member can be produced by simply fitting the outer peripheral edge of the assembly (51) into the opening.

A fourth aspect is an embodiment of the first or second aspect. In the fourth aspect, the second step includes integrating the assembly (51) and the constituent member with each other by insert molding.

In the fourth aspect, the constituent member can be easily formed by insert molding.

A fifth aspect is an embodiment of any one of the first to fourth aspects. In the fifth aspect, the frame member (52) is configured to sandwich the plate-shaped porous member (53) from both sides corresponding to opposite surfaces of the porous member (53).

In the fifth aspect, it is possible to fix the porous member (53) to the inner frame of the frame member (52) by sandwiching the porous member (53) between the frame member (52) from both sides of the porous member (53).

A sixth aspect is an embodiment of any one of the first to fourth aspects. In the sixth aspect, the frame member (52) is configured to cover an outer peripheral edge of the porous member (53).

In the sixth aspect, since the frame member (52) is formed to surround the outer peripheral edge of the porous member (53), the porous member (53) can be stably held in the frame member (52).

A seventh aspect is an embodiment of any one of the first to fourth aspects. In the seventh aspect, the frame member (52) includes a portion formed so as to be in contact only with a side surface of the porous member (53).

In the seventh aspect, since the frame member (52) includes the portion that is to be in contact only with a side surface of the porous member (53), the exposed surface area of the porous member (53) can be increased. Furthermore, the larger the portion of the frame member (52) that is to be in contact only with a side surface of the porous member (53), the greater the exposed surface area of the porous member (53).

An eighth aspect is an embodiment of any one of the first to fourth aspects. In the eighth aspect, the frame member (52) is configured to be fixed to one of opposite surfaces of the plate-shaped porous member (53).

In the eighth aspect, the porous member (53) and the frame member (52) can be bonded to each other, for example, with the use of an adhesive, which is applied to one of the opposite surfaces of the porous member (53). Alternatively, the frame member (52) can be fixed to one of the opposite surfaces of the porous member (53) by a fastening member such as a screw.

A ninth aspect is an embodiment of any one of the first to seventh aspects. In the ninth aspect, the frame member (52) is made of resin.

In the ninth aspect, molding the frame member (52) can be facilitated.

A tenth aspect is an embodiment of the eighth aspect. In the tenth aspect, a material constituting the frame member (52) includes a material of the same as that of the constituent member (41).

In the tenth aspect, a material constituting the frame member (52) is the same as that of the constituent member (41). This increases the adhesion strength between the frame member (52) and the constituent member (41). As a result, the assembly (51) can be stably fixed to the constituent member (41), and the assembly (51) is less likely to fall off from the constituent member (41).

An eleventh aspect is an embodiment of any one of the first to tenth aspects. In the eleventh aspect, the constituent member (41, 62) is a rotor blade (41) or a stator blade (62), each constituting a fan (26).

In the eleventh aspect, noise caused by an air flow generated by the rotation of blades can be reduced by providing the porous member (53) to the rotor blade (41) or the stator blade (62).

A twelfth aspect is directed to a constituent member configured to constitute an air passage (S2) formed within a predetermined device (20) and to be in contact with air flowing through the air passage (S2). The constituent member includes an assembly (51) including a frame member (52) and a porous member (53) fixed to an inner frame of the frame member (52), and the assembly (51) is provided and integrated with the constituent member in a first region (R) of the constituent member.

In the twelfth aspect, noise generation due to air flowing through the air passage (S2) can be reduced by the constituent member.

A thirteenth aspect is directed to a fan including a rotor blade (41) or a stator blade (62), each serving as the constituent member of the twelfth aspect.

### BRIEF DESCRIPTION OF THE DRAWINGS

[FIG. 1] FIG. 1 is a schematic view of an air conditioner, showing its configuration.
[FIG. 2] FIG. 2 is a piping system diagram of a refrigerant circuit of the air conditioner.
[FIG. 3] FIG. 3 is a cross-sectional view of an outdoor unit, showing its configuration.
[FIG. 4] FIG. 4 is a front view of a fan.
[FIG. 5] FIG. 5 is a side view of the fan.
[FIG. 6] FIG. 6 is a perspective view of an assembly.
[FIG. 7] FIG. 7 is an exploded perspective view of the assembly.
[FIG. 8] FIG. 8A and FIG. 8B are diagrams for explaining the shape of a porous member to be fixed to a frame member. FIG. 8A shows the shape of the porous member without a second short side. FIG. 8B shows the shape of the porous member with a second short side.
[FIG. 9] FIG. 9 is a sectional view taken along line IX-IX in FIG. 4, with an enlarged view of a first region and its vicinity.
[FIG. 10] FIG. 10 is a perspective view of a stationary guide of the outdoor unit in a variation.
[FIG. 11] FIG. 11 is a perspective view of the assembly in another embodiment, corresponding to FIG. 6.
[FIG. 12] FIG. 12 is an enlarged view of the assembly in another embodiment, corresponding to the enlarged view included in FIG. 9.
[FIG. 13] FIG. 13 is a perspective view of the assembly in another embodiment, corresponding to FIG. 6.
[FIG. 14] FIG. 14 is a perspective view of the assembly in another embodiment, corresponding to FIG. 6.
[FIG. 15] FIG. 15 is a sectional view of the assembly, taken along arrows XV-XV in FIG. 14.

### DESCRIPTION OF EMBODIMENTS

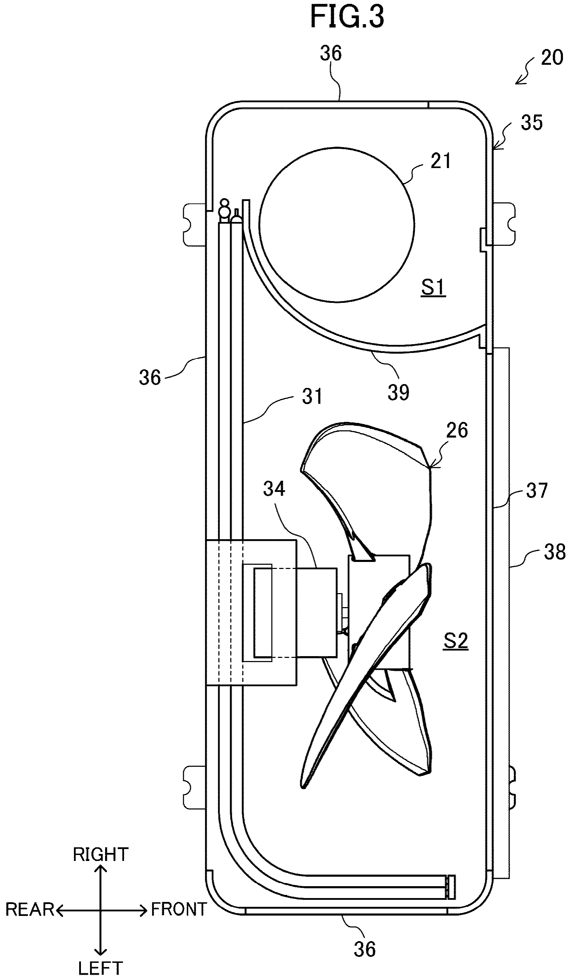

Embodiments of the present invention will be described below with reference to the drawings. The following embodiments are merely illustrative in nature, and are not intended to limit the scope, applications, or use of the present invention. Features of the embodiments, variations, and other examples described below can be combined or partially substituted within the range where the present invention can be embodied. Note that the terms "front," "rear," "right," and "left" used below refer to directions indicated by arrows shown in FIG. 3.

### (1) Air Conditioner

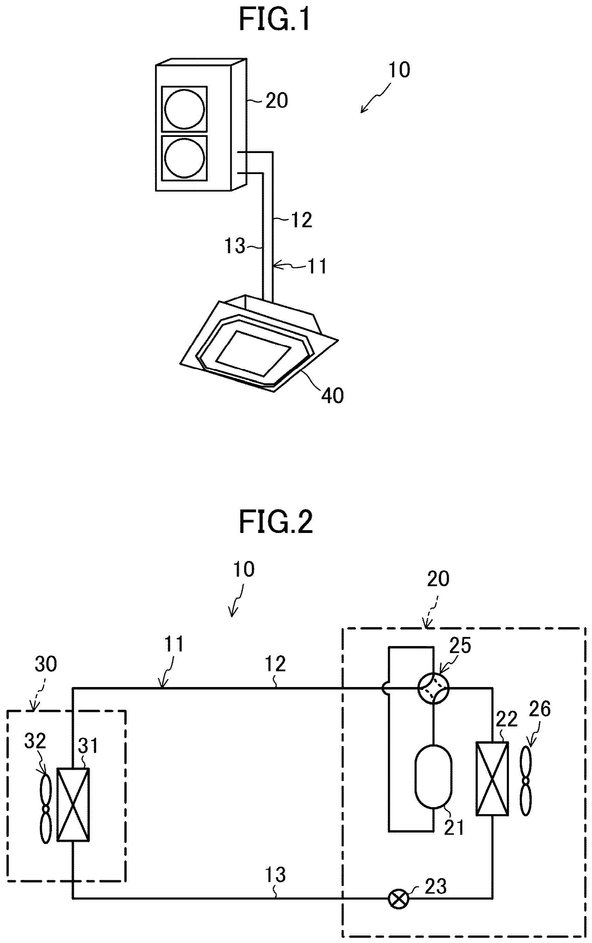

As shown in FIGS. 1 and 2, an air conditioner (10) includes an outdoor unit (20), an indoor unit (30), a liquid connection pipe (12), and a gas connection pipe (13). The outdoor unit (20) and the indoor unit (30) are connected to each other via the liquid connection pipe (12) and the gas connection pipe (13). These components are connected to each other to form a refrigerant circuit. The refrigerant circuit (11) is filled with a refrigerant.

### (1-1) Outdoor Unit

The outdoor unit (20) is installed outdoors. The outdoor unit (20) includes a compressor (21), an outdoor heat exchanger (22), an expansion valve (23), a four-way switching valve (25), and an outdoor fan (26). The outdoor unit (20) is an example of a predetermined device (20) in the present disclosure.

The compressor (21) sucks and compresses a low-pressure gas refrigerant. The compressor (21) discharges the compressed refrigerant. The compressor (21) is a variable displacement compressor.

The outdoor fan (26) transports outdoor air passing through the outdoor heat exchanger (22). The outdoor heat exchanger (22) exchanges heat between outdoor air transported by the outdoor fan (26) and the refrigerant.

The expansion valve (23) decompresses the refrigerant. The expansion valve (23) is an electric expansion valve having a variable opening degree.

The four-way switching valve (25) switches the flow of the refrigerant in the refrigerant circuit (11). The refrigerant circuit (11) performs a first refrigeration cycle and a second refrigeration cycle in response to switching of the four-way switching valve (25).

### (1-2) Indoor Unit

The indoor unit (30) is installed in an indoor space, which is a space to be air-conditioned. The indoor unit (30) includes an indoor heat exchanger (31) and an indoor fan (32). The indoor heat exchanger (31) exchanges heat between the refrigerant and indoor air. The indoor heat exchanger (31) is a fin-and-tube air heat exchanger.

### (2) Operation of Air Conditioner

### (2-1) Cooling Operation

In the cooling operation, the four-way switching valve (25) is set to a state allowing the refrigerant circuit (11) to perform the first refrigeration cycle. In the refrigerant circuit (11), the outdoor heat exchanger (22) functions as a condenser, and the indoor heat exchanger (31) functions as an evaporator. The indoor unit (30) cools, in the indoor heat exchanger (31), air sucked from the indoor space and blows the cooled air into the indoor space.

### (2-2) Heating Operation

In the heating operation, the four-way switching valve (25) is set to a state allowing the refrigerant circuit (11) to perform the second refrigeration cycle. In the refrigerant circuit (11), the indoor heat exchanger (31) functions as a condenser, and the outdoor heat exchanger (22) functions as an evaporator. The indoor unit (30) heats, in the indoor heat exchanger (31), air sucked from the indoor space and blows the heated air into the indoor space.

### (3) Configuration of Outdoor Unit

As shown in FIG. 3, the outdoor unit (20) includes a casing (35) having a rectangular parallelepiped shape. The casing (35) has inlets (36) and an outlet (37). The inlets (36) are provided in the back surface and the left side surface of the casing (35), and the outlet (37) is provided in the front surface of the casing (35). An outlet grille (38) is provided on the front surface of the casing (35). The outlet grille (38) covers the outlet (37).

A partition plate (39) is provided in the internal space of the casing (35). The partition plate (39) partitions the internal space of the casing (35) into an equipment room (S1) on the right and a remaining air passage (S2). The equipment room (S1) houses the compressor (21) and the like. The air passage (S2) allows communication between the inlets (36) and the outlet (37). The outdoor heat exchanger (22) and the outdoor fan (26) are disposed in the air passage (S2). Thus, the air passage (S2) is formed within the outdoor unit (20).

The outdoor heat exchanger (22) is formed in an L shape in a plan view. The outdoor heat exchanger (22) is provided along the back surface and the left side surface of the casing (35) and faces the inlets (36). The outdoor fan (26) is provided downstream of the outdoor heat exchanger (22) in the air passage (S2). The outdoor fan (26) is rotatably connected to a fan motor (34) disposed rearward of the outdoor fan (26).

### (4) Configuration of Outdoor Fan

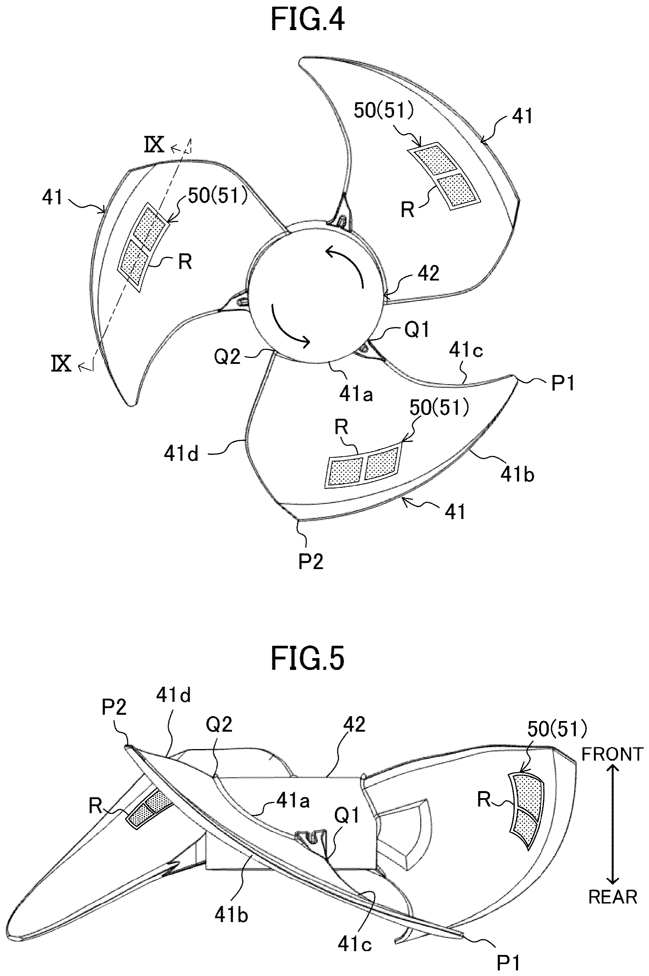

As shown in FIGS. 4 and 5, the outdoor fan (26) is a propeller fan. The outdoor fan (26) is an example of a fan (26) of the present disclosure. The outdoor fan (26) of this embodiment includes one first hub (42) and three rotor blades (41). The above number of rotor blades (41) is merely an example, and the number is not limited. The rotor blades (41) constitute the air passage (S2) and are in contact with air flowing through the air passage (S2). The rotor blades (41) are an example of a constituent member (41, 62) of the present disclosure. The rotor blades (41) are made of resin. The rotor blades (41) are made of a resin material.

The first hub (42) is a cylindrical member having a closed front end portion. The first hub (42) is disposed coaxially with a drive shaft of the fan motor (34). A boss (not shown) is provided at a rear end of the first hub (42). The drive shaft of the motor is connected to the boss.

The three rotor blades (41) are connected to the outer peripheral surface of the first hub (42) and are arranged at equal intervals in the circumferential direction. The three rotor blades (41) are formed so that air flows from the rear side toward the front side on the drawing sheet when the first hub (42) rotates in the direction of arrows shown in FIG. 4. Specifically, each of the rotor blades (41) has four edges (41a, 41b, 41c, 41d) having different shapes. The four edges (41a, 41b, 41c, 41d) are an inner edge (41a), an outer edge (41b), a front edge (41c), and a rear edge (41d).

The inner edge (41a) is an edge of the rotor blade (41) that is in contact with the outer peripheral surface of the first hub (42). The inner edge (41a) is provided to be inclined with respect to the direction of the axis of the first hub (42) from the front end to the rear end of the first hub (42).

The outer edge (41b) is an edge opposed to the inner edge (41a). Similarly to the inner edge (41a), the outer edge (41b) is also inclined with respect to the direction of the axis of the first hub (42). The length of the outer edge (41b) is greater than that of the inner edge (41a). One end P1 of the outer edge (41b) along the rotation direction is located forward, in the rotation direction, of one end Q1 of the inner edge (41a) along the rotation direction. The one end P1 of the outer edge (41b) is located rearward of the rear end of the first hub (42). The other end P2 of the outer edge (41b) along the rotation direction and the other end Q2 of the inner edge (41a) along the rotation direction are located substantially along the same radial direction of the hub when the outdoor fan (26) is viewed from the front.

The front edge (41c) is an edge of the rotor blade (41) that is located forward in the rotation direction. The front edge (41c) connects the one end P1 of the outer edge (41b) and the one end Q1 of the inner edge (41a) to each other. The front edge (41c) is formed to curve backwardly in the rotation direction. The rear edge (41d) is an edge of the rotor blade (41) that is located backward in the rotation direction. The rear edge (41d) connects the other end P2 of the outer edge (41b) and the other end Q2 of the inner edge (41a) to each other. The rear edge (41d) is formed to curve backwardly in the rotation direction.

### (5) Porous Portion

Each of the rotor blades (41) is provided with a porous portion (50). The porous portion (50) is made of a porous material having a plurality of fine pores densely distributed. The porous material in this embodiment is made of resin.

The porous portion (50) is provided so as to extend through the rotor blade (41) in its thickness direction. The porous portion (50) is provided in a first region (R) of the rotor blade (41). The first region (R) is a predetermined region on a blade surface. In other words, the porous portion (50) is provided in a portion of the rotor blade (41). Specifically, when the outdoor fan (26) rotates, air flows toward the front side on the drawing sheet. As a result, one surface of each rotor blade (41) serves as a suction surface. The velocity of the air flowing along the suction surface decreases as the air approaches the rotor blade (41), resulting in an uneven velocity distribution. This may cause separation of air from the rotor blade (41) and generate noise. The first region (R) in this embodiment is provided at a position where the separation may occur. That is, providing the porous portion (50) in the first region (R) reduces the unevenness of the air velocity distribution on the blade surface, reducing separation of the air from the rotor blade (41). As a result, noise generation is reduced.

### (6) Method for Manufacturing Outdoor Fan

Next, a method for manufacturing the outdoor fan (26) will be described. The method for manufacturing the outdoor fan includes: a first step of forming an assembly (51) of a plate-shaped porous member (53) and a frame member (52) by fixing the porous member (53) to an inner frame of the frame member (52); and a second step of integrating the assembly (51) and the rotor blade (41) with each other by providing the assembly (51) in the first region (R) of the rotor blade (41). The method for manufacturing the outdoor fan (26) further includes, before the first step, a third step of shaping the frame member (52) to conform to the shape of the first region (R).

The assembly (51) constitutes the porous portion (50). The assembly (51) includes the plate-shaped porous member (53) and the frame member (52). The plate-shaped porous member (53) is an elastically deformable resin material. The porous member (53) is made of a porous material having a large number of fine pores densely distributed. The average diameter of the pores (air gaps) of the porous member (53) is, for example, in the range of 15 µm to 300 µm. The porosity of the porous member (53) (defined as the total volume of voids divided by the total volume of the porous member) is, for example, in the range of 35% to 90%.

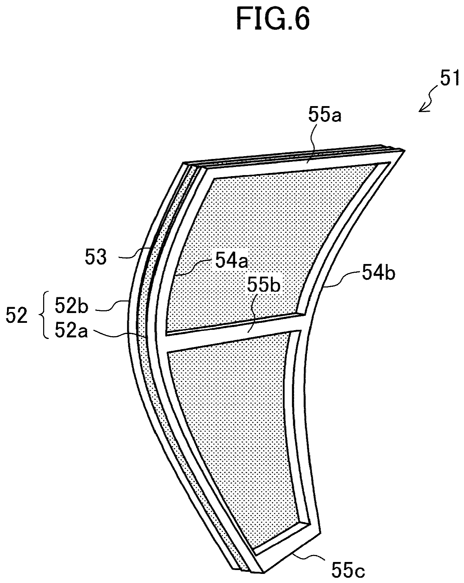

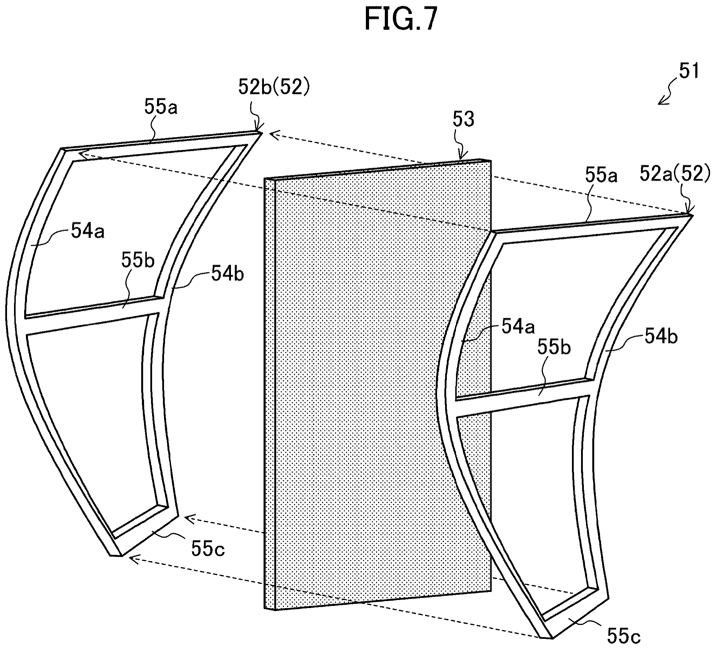

As shown in FIGS. 6 and 7, the frame member (52) includes a first frame (52a) and a second frame (52b). The first frame (52a) and the second frame (52b) are paired. Since the first frame (52a) and the second frame (52b) have the same shape, the first frame (52a) and the second frame (52b) each may be simply referred to as a frame member (52) without distinguishing them from each other in the following description.

The frame member (52) is formed in a substantially rectangular shape. Specifically, the frame member (52) has a first long side (54a), a second long side (54b), a first short side (55a), a second short side (55b), and a third short side (55c). The first long side (54a) and the second long side (54b) have the same length. The first short side (55a), the second short side (55b) and the third short side (55c) have the same length. The first long side (54a) is longer than the second short side (55b).

The first short side (55a) connects one ends of the two long sides (54a, 54b) opposed to each other. The second short side (55b) connects intermediate points of the two long sides (54a, 54b) opposed to each other. The third short side (55c) connects the other ends of the two long sides (54a, 54b) opposed to each other.

The frame member (52) is made of resin. The frame member (52) includes the same type of material as the rotor blade (41). In other words, each of the frames (52a, 52b) is made of the same type of material as the rotor blade (41). Strictly speaking, the frame member (52) includes the same matrix resin as the rotor blade (41). The matrix resin is a resin component that forms the matrix of the frame member (52) and the rotor blade (41). More precisely, the frame member (52) is made of the same resin material as the rotor blade (41). For example, when the rotor blade (41) is made of glass-fiber-reinforced styrene-acrylonitrile resin (ASG resin) or acrylonitrile-butadiene-styrene resin (ABS resin), each frame (52a, 52b) is also made of ASG or ABS, and is not made of polypropylene (PP) resin or the like. To be more specific, when the rotor blade (41) is made of ABS, each frame (52a, 52b) is made of styrene-based rubber.

Each frame (52a, 52b) is molded from a non-porous synthetic resin. Each frame (52a, 52b) is formed so as to conform to the shape of the first region (R) of the rotor blade (41). Therefore, the long sides (54a, 54b) and the short sides (55a, 55b, 55c) are formed to be curved. Each frame (52a, 52b) is molded by injection molding. Specifically, each frame (52a, 52b) can be obtained by pouring molten synthetic resin into a mold shaped to match the shape of the first region (R) and then cooling the poured resin. The third step is executed in this manner.

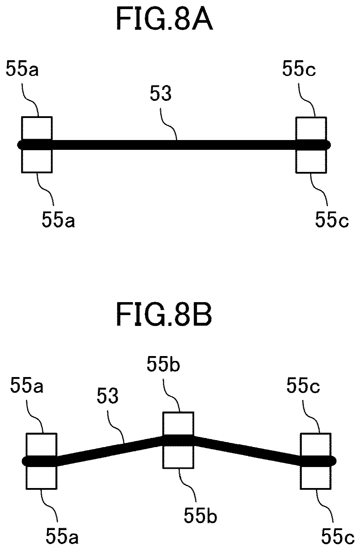

Subsequently, the plate-shaped porous member (53) is sandwiched between the first frame (52a) and the second frame (52b) (see FIG. 6). The first frame (52a) and the second frame (52b) may be configured to fit each other. This allows the porous member (53) to be fixed to the frame member (52) simply by sandwiching the porous member (53) between the first frame (52a) and the second frame (52b). Thus, the assembly 51 can be assembled manually without insert molding. Because the frames (52a, 52b) are shaped to conform to the shape of the first region (R), the porous member (53) sandwiched between the pair of frames (52a, 52b) is deformed to conform to the shape of the first region. More specifically, the outer edge of the porous member (53) is fixed to the frame member (52), and therefore, if the porous member (53) is supported at two points at both ends, as usual, as shown in the sectional view of FIG. 8A, the porous member (53) is arranged to extend between the two points. However, in this embodiment, the frame member (52) has the second short side (55b), and this allows the porous member (53) to be supported at three points, as shown in the sectional view of FIG. 8B, to be shaped to more closely match the first region (R). That is, the second short side (55b) functions as a support portion that supports the porous member (53) inside the frame member (52) and also functions as a shape adjusting portion that adjusts the shape of the porous member (53). The first step is executed in this manner.

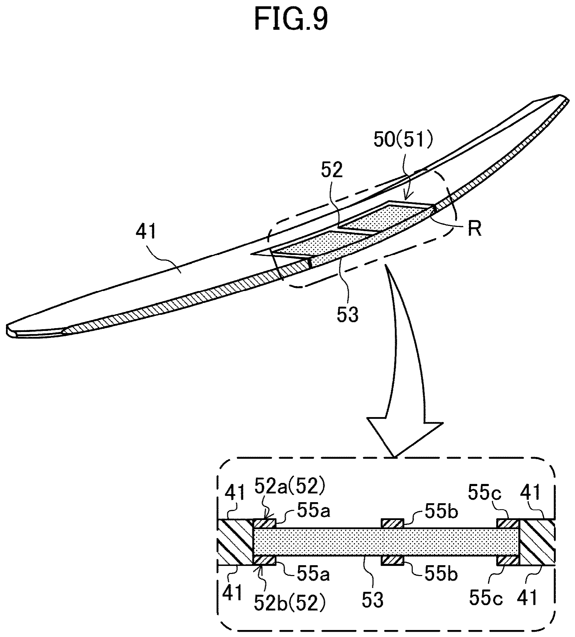

Finally, as shown in FIG. 9, each assembly (51) and the outdoor fan (26) are integrated with each other. Specifically, each assembly (51) is attached to the first region (R) of the corresponding rotor blade (41) such that the assembly (51) constitutes a part of the rotor blade (41). The thickness of the assembly (51) is the same as the thickness of the portion of the rotor blade (41) that is in the first region (R). This allows the rotor blade (41) and the assembly (51) to be flush with each other (see the enlarged view in FIG. 9). Furthermore, since the assembly (51) is formed in the same shape as the first region (R), the assembly (51) is less likely to serve as an air flow resistance to the air flowing on the blade surface, and separation of the air can be reduced.

### (7) Features

### (7-1) Feature 1

The method for manufacturing the outdoor fan of this embodiment includes: the first step of forming the assembly (51) of the plate-shaped porous member (53) and the frame member (52) by fixing the porous member (53) to the inner frame of the frame member (52); and the second step of integrating the assembly (51) and the constituent member (41, 62) with each other by providing the assembly (51) in the first region (R) of the constituent member (41, 62).

According to this embodiment, merely using the plate-shaped porous member (53) is sufficient, and it is not necessary to specially shape the porous member (53) so as to conform to the shape of the first region (R) of the outdoor fan (26). Therefore, the number of manufacturing steps of the outdoor fan (26) can be reduced, and the manufacturing cost can be reduced.

### (7-2) Feature 2

The method for manufacturing the outdoor fan of this embodiment further includes the third step of shaping the frame member (52) so as to conform to the shape of the first region (R).

According to this embodiment, since processing the frame member to conform to the shape of the first region (R) is easier than processing the porous member (53) to conform to the first region (R), the manufacture of the outdoor fan (26) can be facilitated, and variations in the shapes of outdoor fans can be reduced.

### (7-3) Feature 3

The second step in this embodiment includes fixing the assembly (51) to an opening, which serves as the first region (R). Due to this feature, the outdoor fan (26) can be produced by simply fitting the outer peripheral edge of the assembly (51) into the opening.

### (7-4) Feature 4

In this embodiment, the frame member (52) is configured to sandwich the plate-shaped porous member (53) from both sides corresponding to opposite surfaces of the porous member (53). Due to this feature, the porous member (53) can be fixed to the inner frame of the frame member (52) by sandwiching the porous member (53) between the frame member (52) from both sides of the porous member (53).

### (8) Variations

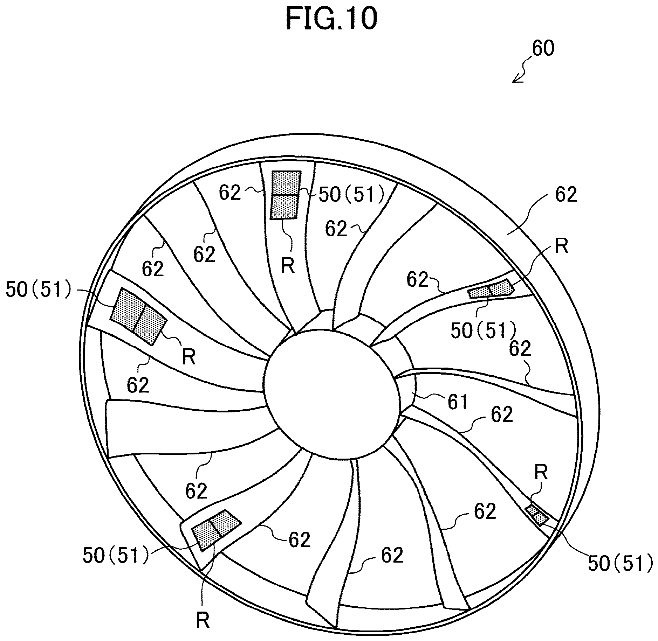

As shown in FIG. 10, the outdoor unit (20) in this variation includes a stationary guide (60). The stationary guide (60) is disposed between the outdoor fan (26) and the inlets (36). The stationary guide (60) has one second hub (61), eleven stator blades (62), and one outer peripheral ring (63). The stator blades (62) are an example of the constituent member (41, 62) of the present disclosure.

The second hub (61) is a cylindrical portion with closed opposite ends. The second hub (61) is arranged substantially coaxially with the first hub (42). The material of the second hub (61) is a non-porous resin.

The outer peripheral ring (63) is a ring-shaped or short cylindrical portion. The outer peripheral ring (63) is arranged substantially coaxially with the second hub (61). The inner diameter of the outer peripheral ring (63) is larger than the outer diameter of the outdoor fan (26). The material of the outer peripheral ring (63) is a non-porous resin.

Each of the stator blades (62) protrudes from the outer peripheral surface of the second hub (61) and extends outward in the radial direction of the second hub (61). Each of the stator blades (62) is provided to extend from the outer peripheral surface of the second hub to the inner peripheral surface of the outer peripheral ring (63). An inner edge portion of each stator blade (62) is fixed to the second hub (61), and an outer edge portion of each stator blade (62) is fixed to the outer peripheral ring. The stator blades are arranged at regular angular intervals in the circumferential direction of the second hub (61).

The first region (R) is provided at a portion of a stator blade (62). Specifically, the stator blade (62) has an opening in the first region (R). In this variation, as in the above-described embodiment, the stator blade (62) and the assembly (51) are integrated with each other by fitting the assembly (51), formed to match the shape of the first region (R), into the first region (R) (i.e., the opening).

### (9) Other Embodiments

The above-described embodiments may also be arranged as follows.

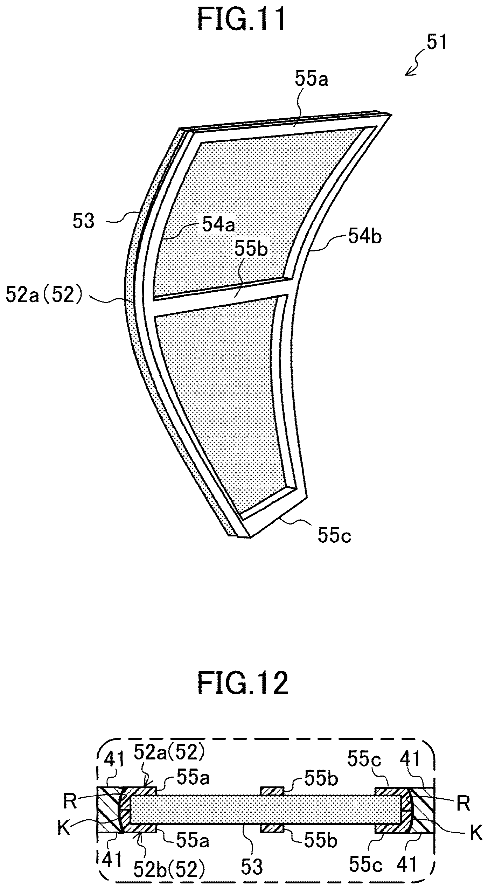

As shown in FIG. 11, the frame member (52) may include a single frame (52a), instead of the pair of frames (52a, 52b). That is, the frame member (52) may be configured to be fixed to one of the opposite surfaces of the plate-shaped porous member (53). In this case, the porous member (53) can be fixed to the frame member (52), for example, with the use of an adhesive, which is applied to one of the opposite surfaces of the plate-shaped porous member (53). Alternatively, the frame member (52) may be fixed to one of the opposite surfaces of the porous member (53) using a fastening member such as a screw.

The predetermined device (20) may be any device as long as an air passage (S2) is formed within the device. When the predetermined device (20) is, for example, a ceiling-mounted indoor unit (30), the constituent member (41, 62) may be a bell mouth disposed in an air passage or an indoor fan that is a centrifugal fan. Thus, the constituent member may be any member that constitutes the air passage (S2) and is in contact with air flowing through the air passage (S2). Alternatively, the constituent member may be a member constituting the air passage (S2) or a member that comes into contact with air flowing through the air passage (S2).

The second step may include integrating the assembly (51) and the fan (26) with each other by insert molding. Specifically, the assembly (51) is placed at a predetermined position in a mold, and the mold is filled with resin. The predetermined position is the position corresponding to the first region (R) of the rotor blade (41). The solidified resin is then removed from the mold. As a result, the fan (26) can be obtained with the assembly (51) provided in the first region (R) of each rotor blade (41). In this way, the fan (26) can also be easily formed by insert molding.

The first region (R) is not limited to a place where air separation occurs. The first region (R) may be located anywhere where noise generation can be reduced by the assembly (51).

As shown in FIG. 12, the assembly (51) may be attached so as to be fitted in an opening in the first region (R). In this case, for example, the assembly (51) may be provided with a fitting structure (K) that allows the outer peripheral surface of the assembly (51) and the inner peripheral surface of the opening to fit each other. Due to the fitting structure, only the assembly needs to be replaced if the porous member (53) is damaged, for example. Accordingly, the cost can be reduced as compared to replacing the entire fan.

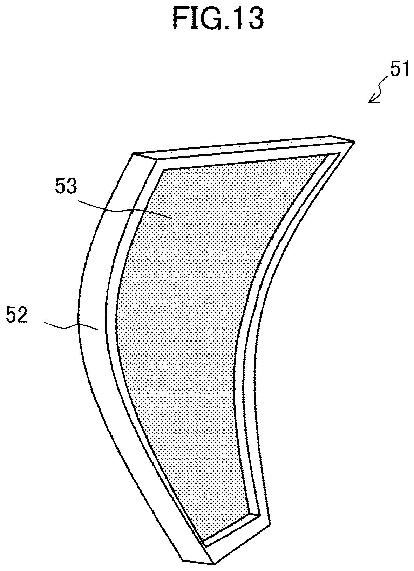

As shown in FIG. 13, the frame member (52) does not have to include the second short side (55b). In this case, the frame member (52) is configured to cover the outer peripheral edge of the porous member (53), for example. The assembly (51) is formed by, for example, insert molding. This eliminates the need for sandwiching the porous member between two frames (52a, 52b) to manufacture the assembly (51), as in the above-described embodiment. Therefore, it is possible to easily manufacture the assembly (51). Furthermore, since the outer peripheral edge of the porous member (53) is covered with the frame member (52), the porous member (53) can be stably fixed inside the frame member (52).

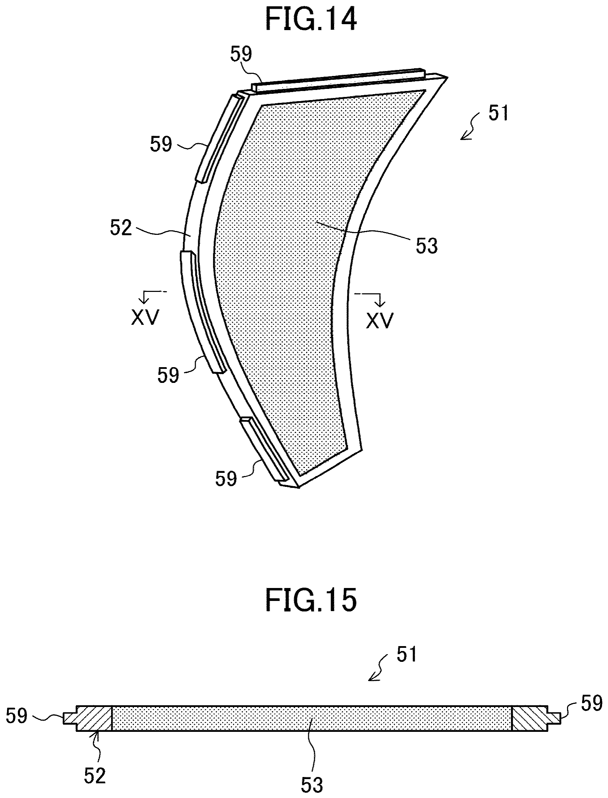

As shown in FIGS. 14 and 15, the frame member (52) may include a portion formed so as to be in contact with only a side surface of the porous member (53). The side surfaces of the porous member (53) are surfaces surrounding the surfaces opposed to each other in its thickness direction. In other words, the side surfaces of the porous member (53) correspond to the outer peripheral surface of the porous member (53). Each of the side surfaces of the porous member (53) may be a flat surface or a curved surface.

In this case, the assembly (51) is formed by, for example, insert molding. This configuration makes it possible to increase the exposed surface area of the porous member (53) as compared to the configuration in which the outer peripheral edge of the porous member is covered with the frame member (52), as in the above-described embodiment.

As shown in FIG. 14, the frame member (52) may be provided with edge portions (59) for facilitating insert molding with the rotor blade (41). Each of the edge portions (59) is in the form of a protrusion extending along the outer peripheral edge of the frame member (52). The edge portion (59) is provided so as to protrude toward the outside of the frame member (52) in a cross-sectional view of the assembly (51) (see FIG. 15). Such edge portions (59) may be provided partially along the outer peripheral edge of the frame member (52) or an edge portion may be provided to extend the entire circumference. The frame member (52) may be formed so as to be in contact only with the side surfaces of the porous member (53). In other words, the frame member (52) may be formed so as not to be in contact with a portion of the porous member (53) that is different from the side surfaces of the porous member (53).

Due to the edge portions (59), the frame member (52) can be formed such that a surface of the porous member (53) and a corresponding surface of the frame member (52) are flush with each other. In other words, the portions where the porous member (53) and the frame member (52) are connected to each other are flat. This improves the effect of reducing air flow resistance on each blade surface and the effect of reducing air separation.

While the embodiments and variations thereof have been described above, it will be understood that various changes in form and details may be made without departing from the spirit and scope of the claims. The foregoing embodiments and variations thereof may be combined or replaced with each other without deteriorating the intended functions of the present disclosure. The terms "first," "second," and the like described above are used to distinguish the elements to which these terms are applied, and do not limit the number or order of the elements.

### INDUSTRIAL APPLICABILITY

As described above, the present disclosure is useful for a method for manufacturing a constituent member, the constituent member, and a fan including the constituent member.

### DESCRIPTION OF REFERENCE CHARACTERS

- 26: Outdoor Fan (Fan)
- 41: Rotor Blade (Constituent Member)
- 51: Assembly
- 52: Frame Member
- 53: Porous Member
- 62: Stator Blade (Constituent Member)
- R: First Region
- S2: Air Passage

## Claims

1. A method for manufacturing a constituent member (41, 62) configured to constituting an air passage (S2) formed within a predetermined device (20) and to be in contact with air flowing through the air passage (S2), the method comprising:
a first step of forming an assembly (51) of a plate-shaped porous member (53) and a frame member (52) by fixing the porous member (53) to an inner frame of the frame member (52); and
a second step of integrating the assembly (51) and the constituent member (41, 62) with each other by providing the assembly (51) in a first region (R) of the constituent member (41, 62).

2. The method of claim 1, further comprising
a third step of shaping the frame member (52) so as to conform to a shape of the first region (R).

3. The method of claim 1 or 2, wherein
the first region (R) is an opening formed in the constituent member (41, 62), and
the second step includes fixing the assembly (51) into the opening.

4. The method of any one of claims 1 to 3, wherein
the second step includes integrating the assembly (51) and the constituent member with each other by insert molding.

5. The method of any one of claims 1 to 4, wherein
the frame member (52) is configured to sandwich the porous member (53) from both sides corresponding to opposite surfaces of the porous member (53).

6. The method of any one of claims 1 to 5, wherein
the frame member (52) is configured to cover an outer peripheral edge of the porous member (53).

7. The method of any one of claims 1 to 6, wherein
the frame member (52) includes a portion formed so as to be in contact only with a side surface of the porous member (53).

8. The method of any one of claims 1 to 7, wherein
the frame member (52) is configured to be fixed to one of opposite surfaces of the porous member (53).

9. The method of any one of claims 1 to 8, wherein
the frame member (52) is made of resin.

10. The method of claim 9, wherein
a material constituting the frame member (52) includes a material of the same type as that of the constituent member (41).

11. The method of any one of claims 1 to 10, wherein
the constituent member (41, 62) is a rotor blade (41) or a stator blade (62), each constituting a fan (26).

12. A constituent member configured to constitute an air passage (S2) formed within a predetermined device (20) and to be in contact with air flowing through the air passage (S2), the constituent member comprising
an assembly (51) including a frame member (52) and a porous member (53) fixed to an inner frame of the frame member (52),
the assembly (51) being provided and integrated with the constituent member in a first region (R) of the constituent member.

13. A fan comprising a rotor blade (41) or a stator blade (62), each serving as the constituent member of claim 12.
